# NOUVEAU FASCICULE DE BREVET EUROPEEN

(11) **EP 3 172 033 B2**
(45) Date de publication et mention de la décision concernant l'opposition: **21.12.2022**
(45) Mention de la délivrance du brevet: 23.05.2018
(21) Numéro de dépôt: 15754266.3
(22) Date de dépôt: 17.07.2015
(51) Int. Cl.: B29C 49/12, B29C 49/78, B29C 49/06, B29C 49/36, B29C 49/42, B29C 49/64, B29K 23/00, B29K 105/00, B29K 67/00, B29L 31/00, G05B 19/18

(54) **PROCÉDÉ DE CONTRÔLE D'UN PROCÉDÉ DE SOUFFLAGE DE RECIPIENTS EN MATIÈRE PLASTIQUE**
VERFAHREN ZUR STEUERUNG EINES VERFAHRENS ZUM BLASFORMEN VON KUNSTSTOFFBEHÄLTERN
METHOD FOR CONTROLLING A METHOD FOR THE BLOW-MOULDING OF PLASTIC CONTAINERS

(30) Priorité: 25.07.2014 FR 1457220
(43) Date de publication de la demande: 31.05.2017
(73) Titulaire: Sidel Participations, 76930 Octeville-sur-Mer (FR)
(72) Inventeur: DERRIEN, Mikaël, F-76930 Octeville-sur-mer (FR)
(74) Mandataire: Sidel Group
(86) Numéro de dépôt international: PCT/FR2015/051976
(87) Numéro de publication internationale: WO 2016/012706

(56) Documents cités:
- EP-A2- 2 460 638
- EP-B1- 1 066 149
- JP-A- H06 254 955
- US-A- 5 169 705
- US-A1- 2014 079 839
- US-A1- 2014 145 378
- US-A1- 2014 203 481

## Description

L'invention se rapporte à la fabrication des récipients, tels que bouteilles ou pots, obtenus par étirage soufflage de préformes en matière thermoplastique, telle que du polyéthylène téréphtalate (PET), du polyéthylène haute densité (PEHD) ou toute autre matière connue.

L'invention concerne plus particulièrement un procédé de fabrication de récipients en matériau plastique, tel que du PET, par étirage soufflage de préformes, dans un moule, avec un fluide sous pression, en particulier de l'air, du type dans lequel la machine pour sa mise en oeuvre comporte un système de commande, un four de conditionnement thermique et une unité de soufflage comprenant au moins un poste de soufflage, ledit poste comportant un moule, dans lequel les préformes sont introduites, en provenance du four, chacune afin de subir une opération de transformation en récipient, l'opération incluant une étape d'étirage (encore appelée étape d'élongation) de la préforme, à l'aide d'une tige d'élongation qui est associée au moule et est commandée en coulissement vers le fond du moule.

Des procédés apparentés, ainsi que les machines pour les mettre en oeuvre, sont décrits dans les documents US2014/145378A1, EP2460638A2,

US2014/079839A1 et JPH06-254955A.

L'étirage et le soufflage du corps d'une préforme nécessitent que celui-ci soit porté à une température supérieure à la température de transition vitreuse du matériau. Il est ainsi tout d'abord procédé à un conditionnement thermique de la préforme en la faisant circuler à l'intérieur d'un four. Le four comporte des moyens de chauffage qui sont par exemple formés par des lampes à infrarouge. La préforme est déplacée dans le four par un système de convoyage.

On introduit ensuite la préforme chauffée dans le moule, puis on l'étire au moyen d'une tige coulissante (appelée tige d'étirage ou d'élongation) et on introduit du gaz sous pression dans la préforme pour la transformer en récipient par soufflage. L'introduction du gaz sous pression comporte dans tous les cas une étape de soufflage proprement dite, qui consiste à introduire dans la préforme un gaz, généralement de l'air sous haute pression (typiquement entre 18 et 40 bars). L'étape de soufflage est habituellement précédée d'une première étape, dite de pré-soufflage, qui consiste à introduire un gaz à une pression inférieure (entre 8 et 15 bars) alors que la tige d'élongation, ayant atteint le fond de la préforme, provoque l'étirage longitudinal de celle-ci. Les étapes d'étirage, de pré-soufflage et de soufflage (alternativement d'étirage et de soufflage) se déroulent selon un séquencement préétabli lors du paramétrage de la machine, séquencement qui tient compte des préformes utilisées et de la forme du récipient à obtenir. L'étirage et le soufflage (ou le pré-soufflage et le soufflage) permettent à la matière constitutive de la préforme de subir une bi-orientation moléculaire, qui confère au récipient final des propriétés mécaniques particulières. Le pré-soufflage amorce la déformation de la préforme pour la transformer en récipient et le soufflage permet une prise d'empreinte optimale dans le moule, afin que les détails du récipient soient bien marqués.

Dans la suite de la description, à moins que d'autres précisions ne soient apportées, l'expression *"processus de soufflage"* sera employée indistinctement pour désigner une séquence comprenant une étape de pré-soufflage suivie d'une étape de soufflage ou pour désigner un processus comprenant seulement une étape de soufflage. En conséquence, *"commencer le processus de soufflage"* signifiera soit débuter l'étape de pré-soufflage en injectant le gaz de pré-soufflage dans le cas où une telle étape existe, soit débuter directement l'étape de soufflage en injectant le gaz de soufflage.

Après un certain temps de contact de la matière plastique contre le moule, lors d'une étape de dégazage, on ramène la pression dans le récipient à la pression atmosphérique avant d'évacuer le récipient final du moule. Dans d'autres procédés, l'étape de dégazage est précédée d'une étape de recyclage d'une partie du fluide contenu dans le récipient, afin de le réinjecter vers d'autres utilisations (dans la machine elle-même ou dans l'usine où la machine est installée). Il peut encore exister une étape dite de balayage pour les bouteilles remplissables à chaud, durant laquelle une circulation d'air assure le refroidissement du récipient qui est au contact d'un moule chaud.

Les préformes sont obtenues généralement par injection de la matière dans des moules d'injection dédiés. Elles présentent un corps cylindrique tubulaire fermé à l'une de ses extrémités axiales, qui est prolongé à son autre extrémité par un col, lui aussi tubulaire. Le col de la préforme est généralement injecté de manière à posséder déjà la forme du col du récipient final, tandis que le corps de la préforme est appelé à subir une déformation relativement importante pour former le corps du récipient final, suite aux opérations de soufflage. Le col des préformes présente souvent une collerette d'appui destinée à les maintenir sur le bord supérieur des moules, lors de la formation des récipients.

Un récipient comporte une paroi latérale (également dénommée corps), un col qui s'étend à partir d'une extrémité supérieure du corps, et un fond qui s'étend à partir d'une extrémité inférieure du corps, à l'opposé du col. Le fond du récipient définit une assise, généralement à la jonction avec le corps, et par laquelle le récipient peut reposer sur une surface plane (telle qu'une table).

Le moule comprend une paroi définissant une cavité destinée à conférer sa forme au corps du récipient. Cette cavité est fermée, à une extrémité inférieure, par un fond de moule destiné à conférer sa forme au fond du récipient.

Aujourd'hui, pour paramétrer une machine pour produire un type de récipient donné, on place dans un moule de la machine, alors que celle-ci est à l'arrêt, une préforme sortie d'injection, (donc froide et n'ayant pas subi de réchauffage) correspondant à celles qui seront utilisées pour ce type de récipient, puis on détermine la position de la tige d'élongation lorsque celle-ci atteint le fond de la préforme. La position à laquelle l'extrémité de la tige d'élongation atteint le fond de la préforme est conventionnellement appelée par la demanderesse point zéro *("Point 0")* de l'élongation. A partir du Point 0, la continuation du mouvement de la tige d'élongation provoque l'élongation de la préforme. Lors du paramétrage, on établit aussi une position de la tige d'élongation à laquelle il faut commencer le processus de soufflage, qui peut correspondre au Point 0 ou être située au-delà de ce point. En d'autres termes, on détermine une longueur théorique d'étirage entre le Point 0 et le commencement du processus de soufflage. En effet, dès lors que la préforme commence à être étirée, si rien d'autre n'est fait, la matière constitutive de la préforme vient se resserrer sur la tige. Une première conséquence est un risque de refroidissement excessif des zones de la préforme au contact avec la tige d'élongation (celle-ci est généralement froide) conduisant à un récipient de piètre qualité, car il devient ensuite impossible de bien déformer ces zones du fait de leur refroidissement. Une autre conséquence est un risque de détérioration, notamment par perçage, du fond de la préforme par la tige d'élongation.

D'autres opérations sont encore paramétrées entre le moment où la tige d'élongation atteint le fond de la préforme et celui où le fond de la préforme, entraîné par la tige, atteint le fond du moule (appelé Point 10). D'autres opérations encore ont lieu après l'atteinte du Point 10.

Cette façon de procéder présente divers inconvénients.

En effet, la détermination du Point 0 est réalisée machine à l'arrêt, sur une préforme froide, sortie de presse d'injection. Or, on a constaté que des préformes apparemment identiques pouvaient présenter un comportement différent après leur passage dans le four de conditionnement thermique des machines de soufflage.

En particulier, on a constaté qu'après chauffage dans le four, la longueur de certaines préformes pouvait varier, la différence pouvant atteindre 5 à 10 mm d'une préforme à l'autre. En particulier, on a constaté que pour des préformes de faible épaisseur, utilisées pour produire des bouteilles de petits formats, par exemple des bouteilles de 0,5 litre, et de faibles épaisseurs de paroi, la longueur de telles préformes en sortie de four pouvait être inférieure de plus de 10 mm par rapport à leur longueur à l'entrée du four, en d'autres termes par rapport à leur longueur en sortie de presse d'injection. Dans le cas de préformes destinées à être transformées en bouteilles de petit format (typiquement des bouteilles légères d'eau de 0.5 litre), une telle réduction de longueur, encore appelée retrait ou "shrinkage" par l'homme du métier, correspond à une variation longitudinale d'environ 15%. Cette réduction s'accompagne également d'une augmentation du diamètre de la préforme. Pour le même type de bouteilles, on a noté des augmentations de diamètre d'environ 7%. D'autre part, il peut exister également, pour une même production de préformes, des écarts de quelques mm entre le retrait maximum et le retrait minimum.

L'existence d'un retrait lors la chauffe des préformes résulte de la génération de contraintes dans les préformes lors de leur fabrication. Ces contraintes apparaissent en raison des pressions ou encore de la température auxquelles la matière est soumise lors de l'injection. Pendant la chauffe, une partie des contraintes est relâchée avec, pour conséquence, une réduction de la longueur et une augmentation du diamètre des préformes. Le relâchement des contraintes est parfois appelé "relaxation".

Des différences de retrait ont été remarquées non seulement pour une même production de préformes ou sur des préformes de même type, mais encore d'un type de préforme à l'autre. Ces phénomènes sont accentués par la tendance actuelle à la réduction du poids des récipients et donc de celui des préformes et de leur épaisseur.

Pour un même type de préformes, les divers phénomènes de retrait et les différences peuvent s'expliquer de la façon suivante : lorsque les préformes sont obtenues à l'aide d'une même presse pouvant contenir plusieurs dizaines de cavités (des presses avec une centaine de cavités sont connues), il peut arriver que, d'une cavité à l'autre, il n'y ait pas exactement la même quantité de matière qui soit injectée, ou bien encore qu'une cavité soit moins bien refroidie que l'autre. En outre, une unique machine de fabrication de récipients doit être alimentée de plusieurs centaines de milliers de préformes (certaines dépassent le million) par jour de production et il est concevable que les préformes destinées à une telle machine ne sortent pas de la même presse d'injection. Dans ce cas, il peut exister des variations d'une presse à l'autre, du fait de possibles différences de réglage des paramètres entre deux presses. Enfin, d'autres paramètres peuvent influer, tel que la qualité intrinsèque de la matière injectée.

Les différences de retrait d'un type de préforme à l'autre peuvent avoir une ou plusieurs origines, parmi lesquelles notamment les paramètres différents des designs des préformes, les épaisseurs des préformes, les spécifications des résines et/ou les paramètres des procédés d'injection, notamment la pression d'injection, quand bien même les poids des préformes seraient identiques.

En conséquence, les récipients produits pourront avoir des répartitions de matière différentes, dans la mesure où certaines préformes n'auront pas subi de retrait, alors que d'autres en auront subi qui, de plus, pourront être différents d'une préforme à l'autre.

Par ailleurs, dans la mesure où certaines préformes seront devenues plus courtes que d'autres avant leur introduction dans le moule, l'étirage effectif commencera avant l'atteinte du Point 0 déterminé lors du paramétrage. Or, la longueur étirée de la préforme avant le début de pré-soufflage influe considérablement sur la répartition de la matière de l'emballage (pour certains récipients, l'étirage doit être nul). Aussi, si l'étirage commence trop tôt par rapport au pré-soufflage, ou si un étirage a lieu alors qu'il n'aurait pas dû, et si les retraits sont différents d'une préforme à l'autre, des répartitions de matière différentes apparaîtront sur les récipients, avec un risque de resserrement de la matière sur la tige, risque d'autant plus élevé que les récipients sont fabriqués avec un fort taux d'élongation.

Les machines actuelles sont de plus en plus automatisées, ce qui rend possible de corriger diverses dérives temporelles du procédé de soufflage. Il est connu (cf. le document WO2008/081107 au nom de la demanderesse) de corréler des points singuliers d'une courbe réelle de soufflage avec des paramètres machine (notamment le débit ou la pression de pré-soufflage), et d'appliquer des corrections des paramètres en fonction de divergences constatées en ces points singuliers. Cependant, l'automatisation ne permet pas de corriger des défauts tels ceux mentionnés ci avant. En effet, une ou des dérives occasionnées par la modification des caractéristiques physiques d'une préforme ne peuvent pas être corrigées par le procédé de régulation décrit dans le document WO20081081107 précédemment cité.

Un premier objet est de remédier à ces inconvénients, en proposant un procédé permettant d'améliorer le formage des récipients produits, tout en limitant le rebut, et en maintenant - voire en augmentant - les cadences de production.

Un autre but est un procédé qui puisse, le cas échéant, être mis en oeuvre dans une machine automatisée telle que celle mentionnée dans le document WO2008/081107 précédemment cité.

Par "formage", dans la suite de la description, on entend plus particulièrement une répartition de la matière.

A ces fins, il est proposé, selon un premier aspect, un procédé selon la revendication 1.

Ainsi, en déterminant la position d'impact, en d'autres termes le Point 0 effectif (point d'impact de la tige d'élongation) et non plus un Point 0 théorique, il devient possible d'optimiser la fabrication des récipients, en tenant compte du comportement des préformes lors de leur réchauffage. Par ailleurs, la détermination du Point 0 effectif permet d'en déduire le retrait longitudinal subi par la préforme, qui est constitué par la différence entre la position d'impact telle que déterminée et celle qu'elle aurait atteint en l'absence de retrait.

Le procédé de contrôle présente, selon diverses mises en œuvre, les caractères suivants, le cas échéant combinés :
- l'entraînement de la tige d'élongation étant effectué à l'aide d'un moteur électrique, la détermination de la position d'impact de la tige d'élongation est effectuée en détectant l'instant où le courant d'entrainement du moteur électrique augmente, traduisant la résistance à l'entrainement subie par la tige d'élongation du fait de son contact avec le fond de la préforme ;
- est calculé l'écart entre la position d'impact et une position étalon d'impact de la tige d'élongation, prédéterminée lors du paramétrage de la machine, un ordre de commencement du processus de soufflage étant donné seulement si l'écart calculé n'excède pas une valeur admissible prédéterminée ;
- l'ordre de commencement du processus de soufflage est donné lorsque la tige d'élongation atteint sa position d'impact ;
- l'ordre de commencement du processus de soufflage est donné après que la tige d'élongation ait atteint sa position d'impact et ait provoqué un commencement d'étirage de la préforme ;
- est calculé l'écart entre la position d'impact et la position étalon d'impact de la tige d'élongation, prédéterminée lors du paramétrage de la machine, un signal de défaut étant émis lorsque l'écart atteint ou excède une valeur admissible prédéterminée ;
- est calculé l'écart entre la position d'impact et la position étalon d'impact de la tige d'élongation, la préforme étant éjectée après la réouverture du moule lorsque la valeur de l'écart dépasse une valeur admissible prédéterminée ;
- est calculé l'écart entre la position d'impact et la position étalon d'impact de la tige d'élongation, est vérifié si l'écart est récurrent et, dans l'affirmative, est modifié au moins un paramètre de la machine ;
- la position étalon d'impact de la tige d'élongation est la position d'impact théorique qui serait obtenue avec une préforme froide sortie de la machine d'injection ;
- la position étalon d'impact de la tige d'élongation est une position d'impact réelle moyenne calculée lors du paramétrage de la machine à partir d'un échantillon de plusieurs préformes ayant subi un réchauffage et, en conséquence un retrait, dans des conditions qui seront mises en œuvre lors de la production.

D'autres objets et avantages de l'invention apparaîtront à la lumière de la description faite ci-après en référence aux dessins annexés dans lesquels :
- la figure 1 est une vue schématique d'une machine de fabrication de récipients ;
- la figure 2 est une vue schématique en coupe d'un poste de soufflage au sein de la machine de la figure 1

Dans la suite de la description, les termes "haut", "bas", et les termes dérivés "haute", "basse", sont utilisés par souci de clarté en référence à l'orientation des figures sans que ceci n'ait une quelconque portée limitative.

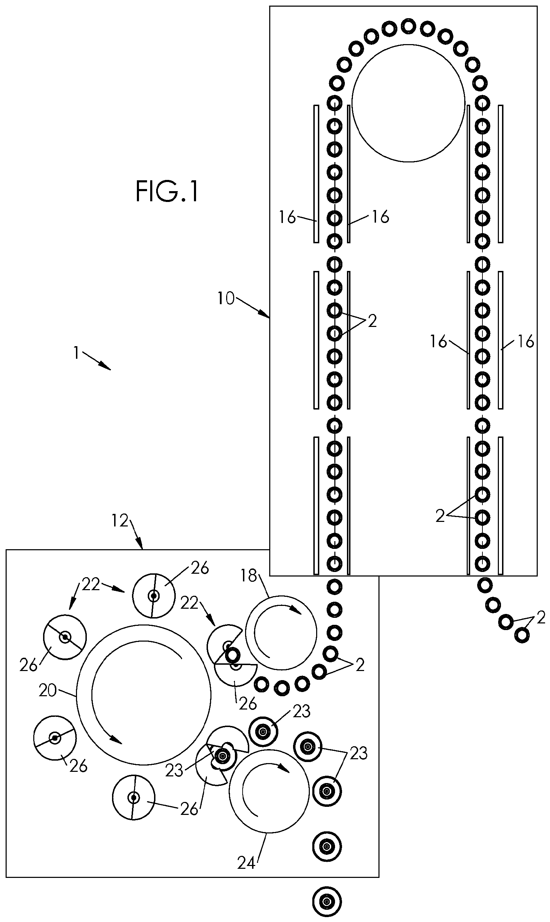

Sur la figure 1 est illustrée schématiquement une machine **1** pour la fabrication de récipients à partir de préformes **2** en matière thermoplastique et plus particulièrement en PET (polyéthylène téréphtalate).

Chaque préforme **2** comporte un corps **3** cylindrique, un col **4** à la forme définitive de celui du récipient à obtenir (qui en général ne subit pas la moindre déformation pendant la fabrication du récipient) et qui s'ouvre à une extrémité du corps **3,** et un fond **5** dont la forme est généralement hémisphérique et qui ferme le corps **3** à une autre extrémité de celui-ci.

La machine 1 de fabrication comprend un four **10** et une unité **12** de soufflage.

Le four **10** a pour fonction de chauffer les préformes **2** à une température supérieure ou égale à la transition vitreuse du matériau constitutif, par exemple supérieure à 80°C lorsque ce matériau est du PET.

Le four **10** comprend un convoyeur (illustré schématiquement) pour transporter les préformes **2** en les faisant tourner sur elles-mêmes, et des moyens de chauffage **16,** tels que des lampes infrarouge faisant face à des réflecteurs ou des sources laser, pour chauffer les préformes **2.**

Les préformes **2** entrent dans le four **10,** montées sur le convoyeur qui effectue un trajet en forme de U. Elles sont chauffées au défilé par les moyens de chauffage **16,** lesquels, le cas échéant, sont placés d'un côté ou de part et d'autre des préformes **2** par rapport à leur sens de défilement.

Les préformes **2** chaudes sont extraites du four **10** et transférées dans des moules de l'unité **12** de soufflage par un premier dispositif **18** de transfert, tel qu'une roue de transfert, interposé entre le four **10** et l'unité **12** de soufflage. La roue de transfert comprend des bras (non représentés, car connus en soi) qui viennent saisir successivement les préformes **2,** après leur sortie du four **10,** au niveau de leur col, pour les introduire chacune leur tour dans un moule **26** de l'unité **12** de soufflage.

L'unité **12** de soufflage comprend un carrousel **20** tournant à la périphérie duquel sont disposés plusieurs postes **22** de soufflage.

Chaque poste **22** de soufflage comprend au moins un moule **26** qui se compose usuellement de trois parties, soit deux demi-moules **26A, 26B** et un fond de moule **26C,** qui définissent la cavité de fabrication du récipient.

Chaque préforme **2** chaude sortant du four **10** est introduite dans un moule **26** du poste **22** de soufflage pour y être soufflée et transformée en récipient **23.** Une fois achevé, le récipient **23** est extrait du poste **22** de soufflage par un second dispositif **24** de transfert, similaire au premier dispositif **18** de transfert, et bien connu de l'homme du métier.

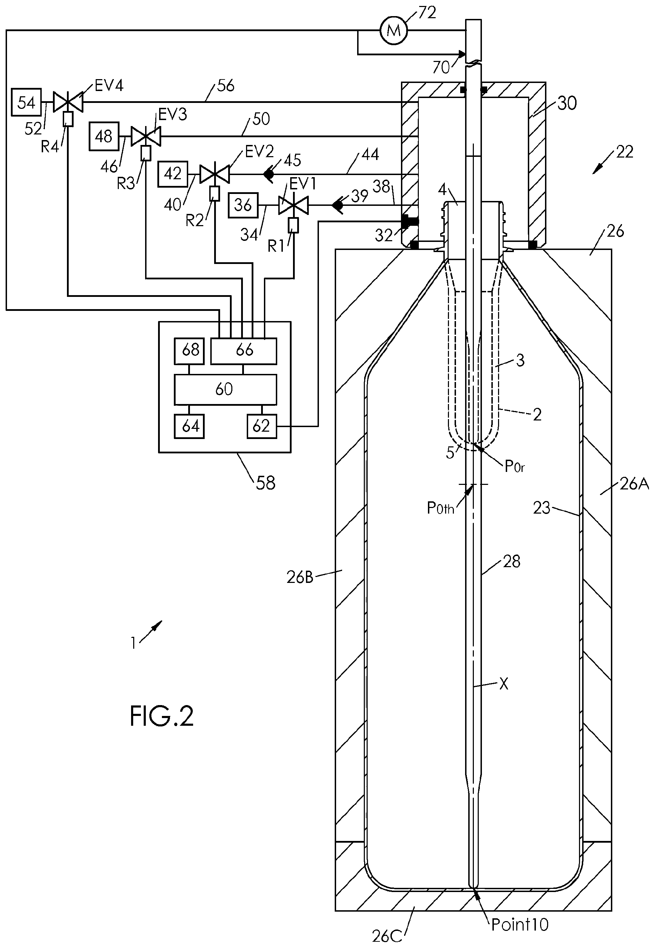

Sur la figure 2 est détaillé un poste **22** de soufflage. Il comprend :
- un moule **26,** en acier ou alliage d'aluminium, constitué de deux demi-moules **26A, 26B** et d'un fond **26C** de moule, définissant une cavité dont le pourtour a la forme du récipient **23** final produit. Le moule **26** est destiné à recevoir successivement des préformes **2** chaudes provenant du four **10,**
- une tige **28** d'élongation montée mobile suivant l'axe **X** principal du moule **26,** entre une position haute permettant l'introduction d'une préforme **2** dans le moule **26** lorsque celui-ci est ouvert et une position basse où l'extrémité de la tige d'élongation **28** est en contact avec le fond **26C** de moule. Le passage de la position haute à la position basse de la tige d'élongation **28** est réalisé pour étirer la matière axialement suivant l'axe **X,**
- une tuyère **30** de soufflage, montée mobile entre une position haute lors de l'introduction de la préforme **2** et une position basse où l'extrémité inférieure de cette tuyère **30** vient coiffer la préforme **2** de manière étanche afin d'amener l'air de soufflage dans la préforme **2** pour venir plaquer la matière plastique contre les parois du moule **26.** La tige **28** d'élongation coulisse dans la tuyère **30,**
- un capteur **32** de pression, débouchant dans la tuyère **30** pour y effectuer une mesure de la pression régnant dans le volume fermé constitué par la tuyère **30** et la préforme **2** pendant l'opération de soufflage du récipient **23,**
- un circuit **34** d'air de pré-soufflage à basse pression comprise entre 3 et 15 bars. Ce circuit **34** comprend une source **36** de basse pression et une conduite **38** permettant d'acheminer l'air de la source **36** de basse pression à la tuyère **30** pour former le futur récipient **23** et une électrovanne **EV1,** dite électrovanne de pré-soufflage, permettant la mise en communication de la source **36** de basse pression avec l'intérieur de la préforme **2,** par la tuyère **30.** L'électrovanne **EV1** est placée sur la conduite **38** entre la source **36** de basse pression et la tuyère **30.** Le circuit **34** d'air de pré-soufflage comporte encore un clapet anti retour **39** évitant que du fluide venant d'une autre source ou contenu dans la préforme (respectivement le récipient) n'y soit introduit,
- un circuit **40** d'air de soufflage à haute pression, comprise entre 15 et 40 bars, qui comprend une source **42** de haute pression et une conduite **44** permettant d'acheminer le fluide de la source **42** de haute pression à la tuyère **30** pour former le futur récipient et une électrovanne **EV2,** dite électrovanne de soufflage, commandant la mise en communication de la source **42** de haute pression avec la préforme **2.** L'électrovanne **EV2** est placée sur la conduite **44** entre la source **42** de haute pression et la tuyère **30.** Le circuit **40** d'air de soufflage comporte encore un clapet anti retour **45** évitant que du fluide venant d'une autre source ou contenu dans la préforme (respectivement le récipient) n'y soit introduit,
- un circuit **46** de récupération de l'air de soufflage, qui comprend une conduite **50** permettant d'acheminer l'air contenu dans le récipient après sa fabrication vers des moyens **48** de récupération, tels qu'un circuit ou un réservoir de récupération, et une électrovanne **EV3,** dite électrovanne de récupération, commandant la mise en communication entre le récipient et les moyens de récupération. L'électrovanne **EV3** est placée sur la conduite **50** du circuit **46** de récupération,
- un circuit **52** de dégazage permettant de mettre en communication l'intérieur du récipient avec l'extérieur, pour la remise à la pression atmosphérique, avant la remontée de la tuyère **30** en position haute, le circuit **52** de dégazage comprenant une boucle de mise à l'atmosphère, dont une extrémité est reliée à un silencieux **54** afin d'éviter toute nuisance sonore, et l'autre, à une conduite **56** reliée à la tuyère **30,** et une électrovanne **EV4,** dite électrovanne de dégazage, commandant la mise en communication de l'air contenu dans le récipient **23** avec l'atmosphère,
- une unité **58** de contrôle électronique, notamment sous forme d'un automate programmable industriel (API), reliée électriquement au capteur **32** de pression, aux électrovannes **EV1, EV2, EV3, EV4** via des actionneurs **R1, R2, R3, R4** respectifs dont la fonction est d'assurer l'ouverture et/ou la fermeture des électrovannes EV1, EV2, EV3, EV4,

Avantageusement, l'unité 58 de contrôle comprend :
- un processeur 60,
- un module 62 d'entrée analogique relié au capteur 32 de pression pour en recueillir les mesures et les convertir en signal numérique en vue de leur traitement par le processeur,
- une mémoire **64** reliée au processeur pour le stockage de données issues du capteur **32** de pression (après conversion),
- un module **66** de sortie analogique commandé par le processeur **60,** et contrôlant les électrovannes **EV1, EV2, EV3, EV4** via les actionneurs **R1, R2, R3, R4** de manière à moduler l'ouverture et la fermeture pour faire varier le débit de fluide fourni à la tuyère **30,** et le dispositif de commande de déplacement axial de la tige **28** d'élongation,
- une interface **68** de communication pour l'implémentation dans l'unité **58** de contrôle du programme régentant son fonctionnement,
- un capteur **70** de détection du couple appliqué par des moyens **72** d'entraînement de la tige **28** d'élongation, relié au module **66** de sortie analogique en vue d'un traitement par le processeur **60.** Dans un mode de réalisation, les moyens **72** d'entraînement sont constitués par un moteur électrique, et le capteur **70** de détection du couple est un capteur de courant.

Le module **66** de sortie analogique reçoit aussi les données de position de la tige **28** d'élongation provenant du moteur électrique

Le fonctionnement de la machine est similaire à celui des machines connues, à la différence que la machine met en oeuvre un procédé selon lequel le déplacement de la tige **28** d'élongation est contrôlé, de façon à déterminer la position d'impact **(POr)** de la tige **28** d'élongation à l'instant où elle atteint le fond **5** de la préforme **2** lors de son déplacement et à donner l'ordre du commencement du processus de soufflage en tenant compte de cette position réelle.

Sur la figure 2, où la préforme **2** est illustrée en traits mixtes, la position d'impact **(P0r)** de la tige **28** d'élongation, alors que l'étirage n'a pas encore commencé est indiquée. A supposer que la préforme **2** ait subi un retrait lors de sa chauffe par dans le four **10** par le moyens de chauffage **16**, le Point 0 théorique **(P0th)** utilisé dans les procédés antérieurs se trouverait un peu plus loin dans la course de la tige **28** d'élongation, tel que ceci est illustré par la figure **2****.**

La détermination de la position d'impact **(POr)** de la tige **28** d'élongation peut être effectuée en détectant le couple d'entrainement de la tige, grâce au capteur **70** qui peut être un capteur de courant. L'arrivée de la tige **28** d'élongation au contact du fond de la préforme **2** se traduit par une augmentation du couple nécessaire à l'entrainement, provoquant un appel de courant plus important au niveau du moteur **72.**

La position de la tige **28** d'élongation à cet instant peut être facilement mesurée à l'aide de moyens à la portée de l'homme de l'art, par exemple des moyens pour mesurer le nombre de tours effectués par le moteur **72** depuis son départ de sa position initiale et envoyer les données correspondantes au module **66** de sortie analogique.

La mesure de la position de la tige **28** d'élongation est permanente afin que, après que la position d'impact **(POr)** ait été atteinte, le processeur **60** soit en mesure de donner un ordre de début du processus de soufflage (ordre de commencement de l'étape de pré-soufflage ou ordre de commencement direct de l'étape de soufflage) à un instant qui a été déterminé lors du paramétrage de la machine **1.**

Dans une mise en oeuvre, la machine **1** est paramétrée pour que l'ordre de début du processus de soufflage soit donné au moment-même où la tige **28** d'élongation entre en contact avec le fond **5** de la préforme **2.** En d'autres termes, l'étirage démarre en synchronisme avec le processus de soufflage. Dans une variante, la machine **1** est paramétrée pour que l'ordre de début du processus de soufflage soit donné après que la tige **28** d'élongation ait atteint sa position d'impact **(POr)** et ait provoqué un commencement d'étirage, de quelques millimètres, de la préforme **2.**

En fait, concrètement, c'est la longueur effective d'étirage qui est vérifiée afin de donner l'ordre de début du processus de soufflage à l'instant approprié.

Dans une mise en oeuvre préférée, lors du paramétrage il est déterminé une position étalon **(Pe)** d'impact de la tige **28** d'élongation.

Dans une variante de cette mise en oeuvre, la position étalon (**Pe**) correspond à la position d'impact théorique ou Point 0 (**P0th**) qui serait obtenu en plaçant dans le moule **26** des préformes n'ayant pas subi de chauffe dans le four **10.**

Dans une seconde variante de cette mise en oeuvre, la position étalon **(Pe)** d'impact est déterminée à l'aide de mesures effectuées à partir de plusieurs préformes **2** correspondant à celles qui seront utilisées en production. Les préformes de l'échantillon sont soumises à une chauffe dans le four **10** identique à celle qu'elles subiront en production, la position d'impact **(POr)** de chacune est mesurée, ce qui permet d'estimer une position moyenne d'impact (en d'autres termes un retrait moyen), qui constitue la position étalon **(Pe).** Bien entendu, le nombre de préformes de l'échantillon doit être significatif afin que la position étalon **(Pe)** d'impact soit correcte.

Quel que soit le type de préforme utilisé pour déterminer la position étalon, celle-ci peut être entrée manuellement dans l'unité de contrôle par un opérateur ou acquise automatiquement lors de sa détermination.

Pour chaque type de préforme, une valeur d'écart admissible entre la position étalon (Pe) d'impact et la position d'impact **(POr)** est entrée dans l'unité **58** de contrôle. La valeur de l'écart admissible est une valeur au-delà de laquelle il devient difficile ou impossible d'envisager un formage correct du récipient, car l'ajustement automatique des étapes de soufflage devient délicat.

En production, la valeur de l'écart entre la position d'impact **(POr)** de chaque préforme et la position étalon **(Pe)** d'impact est calculée et, si pour une préforme elle dépasse celle de l'écart admissible, alors dans une mise en oeuvre un signal de défaut est émis grâce à l'unité **58** de contrôle. En variante ou en complément, la préforme (ou le récipient mal formé) considérée peut être éjectée lorsque le moule est rouvert en fin de cycle.

L'apparition d'un signal de défaut peut être mise à profit pour lancer des investigations complémentaires. Ainsi, un dépassement récurrent d'écart admissible peut survenir après le chargement d'un nouveau lot de préformes, dont la qualité de l'injection aurait varié par rapport aux préformes qualifiées. Aussi, dans une mise en oeuvre, il est vérifié si l'écart est récurrent et, dans l'affirmative, il est tenté de modifier automatiquement au moins un paramètre de la machine pour obtenir un profil de chauffe permettant un retrait compatible avec l'obtention d'un formage correct du récipient.

On conçoit donc que l'invention peut être mise à profit de différentes manières.

Une première manière consiste à effectuer un simple contrôle qualité des préformes **2,** la détermination de la position d'impact **(POr)** n'étant pas systématique mais effectuée seulement sur un seul ou certains des postes **22** de soufflage tous les tours de roue, afin de vérifier en corrélant température préforme et longueur préforme que les préformes introduites dans la machine ont une qualité stable. Effectivement, si, après chauffe identique de préformes **2** présentant les mêmes caractéristiques d'absorption de rayonnement et la même matière il est noté une variation de la longueur, ceci signifie des variations dans les qualités d'injection des lots de préformes **2** chargées successivement.

Le résultat des mesures pourra être comparé par exemple à une longueur de préforme chauffée, jugée conforme et acquise automatiquement ou manuellement lors du paramétrage du process (avec une plage plus ou moins définie par l'utilisateur). Dans le cas de dépassements récurrents, signifiant des retraits en dehors des spécifications définies, l'utilisateur pourra être seulement informé ou la production arrêtée.

Une seconde manière consiste à effectuer, outre le contrôle de qualité des préformes conforme à la première manière, une régulation additionnelle du début du processus de soufflage : dans ce cas une acquisition est effectuée pour chaque poste **22** de soufflage, à chaque tour de roue. La partie contrôle qualité citée précédemment peut être intégrée et, en plus, le début du processus de soufflage (en général le début de l'étape de pré-soufflage, pour autant qu'il soit demandé après le commencement de l'étirage (au-delà du Point 0 réel, ce qui correspond à la majorité des cas), peut être ajusté en fonction de la longueur de la préforme après chauffe et retrait, pour commencer automatiquement après que la préforme **2** ait été étirée d'une longueur prédéterminée lors du paramétrage. Ceci permet de contrôler parfaitement ce paramètre essentiel qu'est la longueur de préforme **2** étirée avant le début du processus de soufflage pour assurer une bonne répartition matière des récipients.

L'invention est particulièrement adaptée aux préformes allégées à faible épaisseur pour lesquelles les taux d'orientation sont élevés et donc la chauffe appliquée, élevée.

Effectivement les faibles épaisseurs de préformes, de l'ordre de 1.5 mm que l'on rencontre de plus en plus sont particulièrement propices à la présence de nombreuses contraintes lors de l'injection. Lors de la chauffe de la préforme, les taux de bi-orientation de la matière sont forts, et la chauffe appliquée dans le four 10 doit être à température élevée (125°c - 135°c). L'association de cette forte température avec les contraintes présentes dans les préformes aura pour effet de générer un retrait des préformes sur leur longueur et une légère expansion sur leur diamètre.

Le retrait important concerne essentiellement les préformes de faible épaisseur destinées à réaliser des bouteilles d'eau plate de petit volume (typiquement inférieur à 0,5 I). Les longueurs de ces préformes sont inférieures à 90mm (typiquement entre 60 et 70mm). Le retrait après chauffe sur ce type de préforme peut facilement atteindre 10mm, ce qui correspond à près de 15% de retrait sur une préforme de 70mm pour une expansion de diamètre d'environ 7%. Une même préforme avec une même résine, mais avec un niveau de contraintes réduit, aura après chauffe un retrait d'environ 5mm (soit environ 7% en retrait et 3% en expansion de diamètre).

La régulation additionnelle du début du processus de soufflage peut être associée à tout type de machines, y compris des machines dites intelligentes, c'est-à-dire qui possèdent par ailleurs d'autres systèmes de régulation (systèmes de contrôle de récipients par vision, ou autres), telles celles décrites dans le document WO2008/081107 précédemment cité. Elle est envisageable pour tout type de préformes et de bouteilles car même si les retraits les plus significatifs sont davantage observés sur l'eau plate en petit volume, ils sont présents sur toutes les préformes.

## Revendications

1. Procédé de contrôle d'un procédé de fabrication d'un récipient par étirage soufflage d'une préforme (2) en matière plastique dans une machine (1) comprenant un moule (26), la préforme (2) comportant un corps (3), un col (4) qui s'ouvre à une extrémité du corps (3) et un fond (5) qui ferme le corps (3) à une autre extrémité de celui-ci, le procédé de fabrication comprenant les opérations consistant à :
- chauffer la préforme à une température prédéterminée dans un four (10) de conditionnement thermique ;
- introduire la préforme (2) dans le moule (26) ;
- déplacer une tige (28) d'élongation afin d'étirer la préforme (2) ;
ce procédé de contrôle étant **caractérisé en ce qu'**il comporte une étape consistant à déterminer la position d'impact (POr) de la tige (28) d'élongation, c'est-à-dire sa position réelle à l'instant où elle atteint le fond (5) de la préforme (2) lors de son déplacement la détermination de la position d'impact (POr) de la tige (28) d'élongation étant effectuée en détectant une augmentation du couple d'entraînement de la tige (28) d'élongation.

2. Procédé selon la revendication 1, **caractérisé en ce que** l'entraînement de la tige (28) d'élongation étant effectué à l'aide d'un moteur (72) électrique, la détermination de la position d'impact (POr) de la tige (28) d'élongation est effectuée en détectant l'instant où le courant d'entrainement du moteur (72) électrique augmente, traduisant la résistance à l'entrainement subie par la tige (28) d'élongation du fait de son contact avec le fond (5) de la préforme (2).

3. Procédé selon l'une des revendications 1 à 2, **caractérisé en ce qu'**est calculé l'écart entre la position d'impact (POr) et une position étalon (Pe) d'impact de la tige (28) d'élongation, prédéterminée lors du paramétrage de la machine (1), un ordre de commencement du processus de soufflage étant donné seulement si l'écart calculé n'excède pas une valeur admissible prédéterminée.

4. Procédé selon l'une quelconque des revendications 1 à 3, **caractérisé en ce que** l'ordre de commencement du processus de soufflage est donné lorsque la tige (28) d'élongation atteint sa position d'impact (P0r).

5. Procédé selon l'une quelconque des revendications 1 à 3, **caractérisé en ce que** l'ordre de commencement du processus de soufflage est donné après que la tige (28) d'élongation ait atteint sa position d'impact (POr) et ait provoqué un commencement d'étirage de la préforme (2).

6. Procédé selon l'une des revendications 1 à 2, **caractérisé en ce qu'**est calculé l'écart entre la position d'impact (POr) et la position étalon (Pe) d'impact de la tige (28) d'élongation, prédéterminée lors du paramétrage de la machine (1), un signal de défaut étant émis lorsque l'écart atteint ou excède une valeur admissible prédéterminée.

7. Procédé selon l'une des revendications 1 à 2, **caractérisé en ce qu'**est calculé l'écart entre la position d'impact (POr) et la position étalon (Pe) d'impact de la tige (28) d'élongation, la préforme (2) étant éjectée après la réouverture du moule (26) lorsque la valeur de l'écart dépasse une valeur admissible prédéterminée.

8. Procédé selon l'une des revendications 1 à 2, **caractérisé en ce qu'**est calculé l'écart entre la position d'impact (POr) et la position étalon (Pe) d'impact de la tige (28) d'élongation, est vérifié si l'écart est récurrent et, dans l'affirmative, est modifié au moins un paramètre de la machine.

9. Procédé selon l'une des revendications 3 à 8, **caractérisé en ce que** la position étalon (Pe) d'impact de la tige (28) d'élongation est la position d'impact théorique (POth) qui serait obtenue avec une préforme (2) froide sortie de la machine d'injection.

10. Procédé selon l'une des revendications 3 à 8, **caractérisé en ce que** la position étalon (Pe) d'impact de la tige (28) d'élongation est une position d'impact réelle moyenne calculée lors du paramétrage de la machine (1) à partir d'un échantillon de plusieurs préformes (2) ayant subi un réchauffage et, en conséquence un retrait, dans des conditions qui seront mise en œuvre lors de la production.

## Patentansprüche

1. Verfahren zur Steuerung eines Verfahrens zur Herstellung eines Behälters durch Streckblasen einer Preform (2) aus Kunststoff in einer Maschine (1), die eine Form (26) umfasst, wobei die Preform (2) einen Körper (3), einen Hals (4), der sich an einem Ende des Körpers (3) öffnet, und einen Boden (5), welcher den Körper (3) an einem anderen Ende desselben verschließt, umfasst, wobei das Verfahren zur Herstellung die Arbeitsgänge umfasst, die darin bestehen:
- die Preform in einem Ofen (10) zur thermischen Konditionierung auf eine vorbestimmte Temperatur zu erwärmen;
- die Preform (2) in die Form (26) einzuführen;
- eine Streckstange (28) zu verschieben, um die Preform (2) zu strecken;
wobei dieses Verfahren zur Steuerung **dadurch gekennzeichnet ist, dass** es einen Schritt aufweist, der darin besteht, die Aufprallposition (POr) der Streckstange (28) zu bestimmen, das heißt ihre Position zu dem Zeitpunkt, zu dem sie bei ihrer Verschiebung den Boden (5) der Preform (2) erreicht, wobei die Bestimmung der Aufprallposition (POr) der Streckstange (28) durchgeführt wird, indem eine Erhöhung des Antriebsmoments der Streckstange (28) erkannt wird.

2. Verfahren nach Anspruch 1, **dadurch gekennzeichnet, dass**, wenn der Antrieb der Streckstange (28) mithilfe eines elektrischen Motors (72) durchgeführt wird, die Bestimmung der Aufprallposition (POr) der Streckstange (28) durchgeführt wird, indem der Zeitpunkt erkannt wird, zu dem sich der Antriebsstrom des elektrischen Motors (72) erhöht, was den Widerstand gegenüber dem Antrieb zum Ausdruck bringt, den die Streckstange (28) infolge ihres Kontakts mit dem Boden (5) der Preform (2) erfährt.

3. Verfahren nach einem der Ansprüche 1 bis 2, **dadurch gekennzeichnet, dass** die Abweichung zwischen der Aufprallposition (POr) und einer Standard-Aufprallposition (Pe) der Streckstange (28), die bei der Parametrierung der Maschine (1) vorbestimmt wurde, berechnet wird, wobei ein Befehl für den Beginn des Blasprozesses nur gegeben wird, falls die berechnete Abweichung einen vorbestimmten zulässigen Wert nicht überschreitet.

4. Verfahren nach einem der Ansprüche 1 bis 3, **dadurch gekennzeichnet, dass** der Befehl für den Beginn des Blasprozesses gegeben wird, wenn die Streckstange (28) ihre Aufprallposition (POr) erreicht.

5. Verfahren nach einem der Ansprüche 1 bis 3, **dadurch gekennzeichnet, dass** der Befehl für den Beginn des Blasprozesses gegeben wird, nachdem die Streckstange (28) ihre Aufprallposition (POr) erreicht hat und einen Beginn des Streckens der Preform (2) hervorgerufen hat.

6. Verfahren nach einem der Ansprüche 1 bis 2, **dadurch gekennzeichnet, dass** die Abweichung zwischen der Aufprallposition (POr) und der Standard-Aufprallposition (Pe) der Streckstange (28), die bei der Parametrierung der Maschine (1) vorbestimmt wurde, berechnet wird, wobei ein Standardsignal gesendet wird, wenn die Abweichung einen vorbestimmten zulässigen Wert erreicht oder überschreitet.

7. Verfahren nach einem der Ansprüche 1 bis 2, **dadurch gekennzeichnet, dass** die Abweichung zwischen der Aufprallposition (POr) und der Standard-Aufprallposition (Pe) der Streckstange (28) berechnet wird, wobei die Preform (2) nach dem erneuten Öffnen der Form (26) ausgeworfen wird, wenn der Wert der Abweichung einen vorbestimmten zulässigen Wert überschreitet.

8. Verfahren nach einem der Ansprüche 1 bis 2, **dadurch gekennzeichnet, dass** die Abweichung zwischen der Aufprallposition (POr) und der Standard-Aufprallposition (Pe) der Streckstange (28) berechnet wird, überprüft wird, ob die Abweichung wiederkehrend ist, und, wenn dies der Fall ist, wenigstens ein Parameter der Maschine geändert wird.

9. Verfahren nach einem der Ansprüche 3 bis 8, **dadurch gekennzeichnet, dass** die Standard-Aufprallposition (Pe) der Streckstange (28) die theoretische Aufprallposition (POth) ist, welche mit einer kalten Preform (2) erhalten würde, die in der Spritzmaschine hergestellt wurde.

10. Verfahren nach einem der Ansprüche 3 bis 8, **dadurch gekennzeichnet, dass** die Standard-Aufprallposition (Pe) der Streckstange (28) eine mittlere tatsächliche Aufprallposition ist, die bei der Parametrierung der Maschine (1) aus einer Stichprobe von mehreren Preformen (2) berechnet wurde, die eine Erwärmung und infolgedessen eine Schrumpfung unter Bedingungen erfahren haben, wie sie bei der Produktion vorliegen werden.

## Claims

1. Method for controlling a method for the manufacture of a container by the stretch-blow-moulding of a plastic preform (2) in a machine (1) comprising a mould (26), the preform (2) comprising a body (3), a neck (4) which is open at one end of the body (3) and a bottom (5) which closes the body (3) at another end thereof, the method of manufacture comprising the operations consisting in:
- heating the preform to a predetermined temperature in a thermal conditioning oven (10);
- introducing the preform (2) into the mould (26);
- moving a stretch rod (28) in order to stretch the preform (2);
this control method being **characterized in that** it comprises a step consisting in determining the position of impact (POr) of the stretch rod (28), namely its actual position at the instant that it reaches the bottom (5) of the preform (2) during its movement, the determining of the position of impact (POr) of the stretch rod (28) being performed by detecting an increase in the stretch rod (28) driving torque.

2. Method according to Claim 1, **characterized in that** with the driving of the stretch rod (28) being achieved using an electric motor (72), the determining of the position of impact (POr) of the stretch rod (28) is achieved by detecting the instant at which the electric motor (72) drive current increases, indicating the resistance to the drive experienced by the stretch rod (28) as a result of it coming into contact with the bottom (5) of the preform (2) .

3. Method according to one of Claims 1 to 2, **characterized in that** the difference between the position of impact (POr) and a calibration position of impact (Pe) of the stretch rod (28) predetermined during the setting-up of the machine (1) is calculated, a command to begin the blowing process being issued only if the calculated difference does not exceed a predetermined permissible value.

4. Method according to any one of Claims 1 to 3, **characterized in that** the command to begin the blowing process is issued when the stretch rod (28) reaches its position of impact (P0r).

5. Method according to any one of Claims 1 to 3, **characterized in that** the command to begin the blowing process is issued after the stretch rod (28) has reached its position of impact (P0r) and has caused the preform (2) to begin to stretch.

6. Method according to one of Claims 1 to 2, **characterized in that** the difference between the position of impact (P0r) and the calibration position of impact (Pe) of the stretch rod (28) predetermined during the setting-up of the machine (1) is calculated, a fault signal being emitted when the difference reaches or exceeds a predetermined permissible value.

7. Method according to one of Claims 1 to 2, **characterized in that** the difference between the position of impact (P0r) and the calibration position of impact (Pe) of the stretch rod (28) is calculated, the preform (2) being ejected after reopening of the mould (26) when the value of the difference exceeds a predetermined permissible value.

8. Method according to one of Claims 1 to 2, **characterized in that** the difference between the position of impact (POr) and the calibration position of impact (Pe) of the stretch rod (28) is calculated, a check is made to determine whether the difference is recurrent and, if it is, at least one machine parameter is modified.

9. Method according to one of Claims 3 to 8, **characterized in that** the calibration position of impact (Pe) of the stretch rod (28) is the theoretical position of impact (POth) that would be obtained with a cold preform (2) leaving the injection machine.

10. Method according to one of Claims 3 to 8, **characterized in that** the calibration position of impact (Pe) of the stretch rod (28) is a mean actual position of impact calculated during the setting-up of the machine (1) from a sample of several preforms (2) which have undergone warming and, therefore, shrinkage, under conditions that will be implemented during production.
